# EUROPÄISCHE PATENTSCHRIFT

(11) **EP 2 459 378 B1**
(45) Veröffentlichungstag und Bekanntmachung des Hinweises auf die Patenterteilung: **05.07.2017**
(21) Anmeldenummer: 10739604.6
(22) Anmeldetag: 30.07.2010
(51) Int. Cl.: B32B 27/36, G06K 19/077, B32B 27/08, B32B 27/20, B32B 27/18

(54) **DIMENSIONSSTABILE POLYESTERFOLIE UND DATENTRÄGER MIT DER POLYESTERFOLIE**
DIMENSIONALLY STABLE POLYESTER FILM AND DATA CARRIER COMPRISING THE POLYESTER FILM
FEUILLE DE POLYESTER DIMENSIONNELLEMENT STABLE, ET SUPPORT DE DONNÉES COMPORTANT LA FEUILLE DE POLYESTER

(30) Priorität: 31.07.2009 DE 102009035415
(43) Veröffentlichungstag der Anmeldung: 06.06.2012
(73) Patentinhaber: Giesecke & Devrient GmbH, 81677 München (DE)
(72) Erfinder: RIEDL, Josef, 85395 Attenkirchen (DE)
(86) Internationale Anmeldenummer: PCT/EP2010/061130
(87) Internationale Veröffentlichungsnummer: WO 2011/012703

(56) Entgegenhaltungen:
- EP-A1- 1 057 656
- EP-A1- 1 502 763
- WO-A1-00/29212
- WO-A1-01/96100
- WO-A1-2005/110773
- DATABASE WPI Week 200274 Thomson Scientific, London, GB; AN 2002-687688 XP002610914, -& JP 2002 249652 A (MITSUBISHI PLASTICS IND LTD) 6. September 2002 (2002-09-06)
- DATABASE WPI Week 200855 Thomson Scientific, London, GB; AN 2008-J45266 XP002610915, -& JP 2008 162058 A (RIKEN VINYL KOGYO KK) 17. Juli 2008 (2008-07-17)

## Beschreibung

Gegenstand der vorliegenden Erfindung ist ein Folienverbundmaterial mit mindestens einer Basisschicht aus einem Basisschichtmaterial, die eine erste Oberfläche und eine zweite Oberfläche aufweist, und mit einer ersten Deckschicht aus einem ersten Deckschichtmaterial, die die erste Oberfläche der Basisschicht abdeckt. Gegenstand der vorliegenden Erfindung ist auch ein Verfahren zur Herstellung des Folienverbundmaterials, sowie mit dem Folienverbundmaterial hergestellte Produkte wie eine Karte mit einem elektronischen Datenträger, und ein Verfahren zur Herstellung derartiger Karten.

Die kontaktlose Datenübermittlung gewinnt zunehmend an Bedeutung, beispielsweise zur Kennzeichnung von Waren, für Warenkontrollzwecke, und insbesondere auch für elektronische Ausweise. Als Datenträger wirkt dabei typischerweise ein Modul aus IC-Chip und Antenne in Form eines integrierten Dünnschicht-Schaltkreises. Der Chip besteht aus einer Mehrzahl von elektronischen Bauteilen wie Transistoren, Kondensatoren, Widerständen, Dioden, etc., und die Antenne ist eine leitfähige Schicht, typischerweise in Spulenform. Die gespeicherte Information kann ausgelesen werden und beispielsweise auf einem Display angezeigt werden oder bestimmte Befehle übermitteln. Die Datenträger werden beispielsweise in Etiketten integriert auf der Oberfläche von Gegenständen angebracht oder, bei Anwendungen wie Ausweisen, Displaykarten oder in der Transpondertechnik, in den Schichtaufbau einer Karte integriert. Dazu werden die Datenträger zwischen Folien, einer Trägerfolie und mindestens einer abdeckenden weiteren Folie, eingeschlossen. Trägerfolien sind typischerweise Folien aus Polyester, Polycarbonaten, Polyamiden, Polyimiden, und insbesondere biaxial gestreckte Folien wie BOPET. Abdeckende Folien sind typischerweise Folien aus Polyethylen, Polypropylen, Polystyrol, Polyamiden, Polycarbonaten, Polyestern und anderen thermoplastischen Kunststoffen. Die Folien werden durch Laminieren verbunden, wobei Temperaturbelastungen der Folien unvermeidbar sind. Wenn sich die Trägerfolien dabei verziehen, kann es zu Unterbrechungen in der Kontaktierung der Bauteile untereinander kommen. Auch im Gebrauch kann eine derartige Datenträgerkarte hohen Temperaturen ausgesetzt werden, beispielsweise in einem geparkten Fahrzeug bei Sonneneinstrahlung.

Wegen der erforderlichen hohen Temperaturstabilität werden als Trägerfolien für elektronische Bauteile, oder auch für andere in dem Schichtaufbau einer Karte geschützt unterzubringende Elemente, gerne biaxial orientierte teilkristalline Polyesterfolien verwendet, wie biaxial orientiertes teilkristallines PET. Derartige Folien sind beispielsweise unter dem Markennamen Melinex oder Mylar bekannt und erhältlich. Solche Folien haben den Vorteil, dass sie durch die Verstreckung sehr dimensionsstabil und temperaturstabil sind, d. h. die Dimensionen der Folien verändern sich auch unter Laminierungstemperaturen kaum. Außerdem wird durch die Verstreckung auch eine hohe mechanische Stabilität der Folie erzielt.

Die biaxial orientierten Polyesterfolien haben allerdings auch Nachteile. Beispielsweise verlieren die Folien ihre innere Festigkeit, wenn sie mit Füllstoffen hergestellt werden, um opake Folien zu erhalten. Bei gefüllten Folien entstehen durch die Verstreckung im Material Mikroporen, die zu eklatanten Materialschwächen führen, was wiederum zur Folge hat, dass diese Folien zu sogenannten "Kohäsionsbrüchen" neigen. Außerdem müssen die Folien nicht nur mechanisch stabil und temperaturstabil sein, sondern sich auch gut mit üblichen Kartenmaterialien laminieren lassen und vorzugsweise gut bedruckbar sein. Die biaxial orientieren Polyesterfolien können jedoch nicht ohne Hilfsschichten laminiert werden, und auch ein Bedrucken ist nur nach vorheriger Primerung und/oder Beschichtung möglich, denn die Folien sind in der Regel nur ohne die gewünschte und für die Bedruckung erforderliche Oberflächenrauhigkeit herstellbar. Ein weiterer Nachteil besteht darin, dass die verstreckten Folien nur in einer begrenzten Anzahl von Folientypen und Foliendicken verfügbar sind, und dass sie wegen ihrer Orientierung nur als Kernschicht in einen symmetrischen Kartenaufbau eingebaut werden können, da es sonst zu einer Verwölbung der Karte kommen kann.

Weitere Folien, die gerne als Trägerfolien eingesetzt werden, sind beispielsweise Folien aus Polycarbonat, die den Nachteil haben, dass sie wenig kratzfest, nicht sehr dimensionsstabil, schwer verarbeitbar und zudem relativ teuer sind, und Folien aus Polyvinylchlorid, die den Nachteil haben, dass sie nicht dimensionsstabil sind und leicht brechen, weshalb mit diesen Folien hergestellte Karten oft schon nach kurzer Zeit ersetzt werden müssen.

Wünschenswert wäre eine Folie, die die obigen Nachteile des Stands der Technik nicht aufweist und sich gut als Trägerfolie für elektronische Bauteile und andere Elemente im Schichtverbund einer Karte eignet.

Aufgabe der vorliegenden Erfindung ist es daher, eine Folie bereitzustellen, die die Nachteile der Folien des Stands der Technik möglichst weitgehend vermeidet.

Aufgabe der vorliegenden Erfindung ist es insbesondere, ein Folienmaterial bereitzustellen, das eine vorteilhafte Kombination der folgenden Eigenschaften aufweist:
- Es sollte möglichst dimensionsstabil und temperaturstabil sein;
- es sollte eine hohe mechanische Stabilität haben;
- es sollte nicht zum Kohäsionsbruch neigen;
- es sollte mit allen gängigen Kunststoff-Kartenmaterialien gut laminierbar sein, auch ohne Verwendung von Hilfsschichten;
- es sollte gut bedruckbar sein, auch ohne Druckvorbehandlung; und
- es sollte opak herstellbar sein.

Aufgabe der vorliegenden Erfindung ist es auch, eine dimensionsstabile und mechanisch stabile Karte, wie eine Datenträgerkarte, die einen elektronischen Datenträger oder einen anderen Gegenstand manipulationsgeschützt enthält, bereitzustellen. Die Karte sollte mittels Laminiertechnik herstellbar sein.

Die Aufgaben werden gelöst durch das Folienverbundmaterial, die Datenträgerkarte und die Verfahren zu deren Herstellung mit den Merkmalen, wie sie in den unabhängigen Ansprüchen angegeben sind. Weiterbildungen der Erfindung sind in den jeweiligen abhängigen Ansprüchen angegeben.

In der einfachsten Ausführungsform weist das erfindungsgemäße Folienverbundmaterial eine Basisschicht aus einem Basisschichtmaterial, eine erste Deckschicht aus einem ersten Deckschichtmaterial, wobei die erste Deckschicht eine der Oberflächen der Basisschicht vollflächig abdeckt, sowie zwischen der Basisschicht und der ersten Deckschicht mindestens eine erste Zwischenschicht aus einem ersten Zwischenschichtmaterial auf. Das Basisschichtmaterial ist ein Polybutylenterephthalatmaterial und das erste Deckschichtmaterial ist ein von dem Basisschichtmaterial verschiedenes Polyestermaterial, bevorzugt ein Co-Polyestermaterial, d. h. ein Polyester-Copolymer. Das erste Zwischenschichtmaterial ist ein von dem Basisschichtmaterial und dem ersten Deckschichtmaterial verschiedenes Polyestermaterial, das Polybutylenterephthalat (PBT) in einer geringeren Menge enthält als das Basisschichtmaterial, aber in einer höheren Menge als das erste Deckschichtmaterial.

Gemäß bevorzugten Ausführungsformen weist das erfindungsgemäße Folienverbundmaterial mindestens drei Schichten auf. Ein Folienverbundmaterial mit drei Schichten weist zusätzlich zu der Basisschicht und der ersten Deckschicht eine zweite Deckschicht aus einem zweiten Deckschichtmaterial auf, wobei die zweite Deckschicht die andere Oberfläche der Basisschicht vollflächig abdeckt, und wobei das zweite Deckschichtmaterial ein von dem Basisschichtmaterial verschiedenes Polyestermaterial ist, bevorzugt ein Co-Polyestermaterial, d. h. ein Polyester-Copolymer. Das erste und das zweite Deckschichtmaterial können gleich oder verschieden sein.

Weitere Ausführungsformen des erfindungsgemäßen Folienverbundmaterials weisen zwischen der Basisschicht und der ersten Deckschicht zwischen der Basisschicht und der zweiten Deckschicht mindestens eine zweite Zwischenschicht aus einem zweiten Zwischenschichtmaterial auf. Die erste und/ oder die zweite Zwischenschicht ist jeweils vollflächig zwischen der Basisschicht und der ersten Deckschicht bzw. der zweiten Deckschicht ausgebildet. Das zweite Zwischenschichtmaterial ist ein von dem Basisschichtmaterial und dem zweiten Deckschichtmaterial verschiedenes Polyestermaterial, das Polybutylenterephthalat (PBT) in einer geringeren Menge enthält als das Basisschichtmaterial, aber in einer höheren Menge als das zweite Deckschichtmaterial. Das erste und das zweite Zwischenschichtmaterial kann gleich oder verschieden sein.

Das erfindungsgemäße Folienverbundmaterial kann weitere Zwischenschichten enthalten, wobei die Menge an PBT in den Zwischenschichten jeweils von der Basisschicht zur Deckschicht hin abnimmt.

Das Basisschichtmaterial ist ein Polybutylenterephthalatmaterial. Ein Polybutylenterephthalatmaterial im Sinne der vorliegenden Erfindung ist ein Material aus Polymeren und gegebenenfalls Zusatzstoffen. Der Polymeranteil an dem Polybutylenterephthalatmaterial beträgt mindestens 75 Gew.-%, bevorzugt mindestens 85 Gew.-%, und der Anteil an Polybutylenterephthalat (PBT) an dem Polymer beträgt mindestens 50 Gew.-%, bevorzugt 60 bis 100 Gew.-%, bevorzugter 80 bis 100 Gew.-%, besonders bevorzugt 100 Gew.-% PBT. Die übrigen Polymere, falls vorhanden, sind bevorzugt ein von PBT verschiedener Polyester und/oder Copolyester oder ein Gemisch von Polyestern und/oder Copolyestern. Besonders bevorzugt ist Polyethylenterephthalat-Glykol-Copolymer (PETG). Es ist darauf zu achten, keine Polyester zu verwenden, die als Weichmacher wirken können. Der Polymeranteil kann auch Extender enthalten, doch bevorzugt sind keine Extender enthalten.

PBT ist ein teilkristalliner Polyester mit einer ausgewogenen Kombination von Steifigkeit und Festigkeit bei zugleich guter Zähigkeit und großer Wärmeformbeständigkeit sowie hervorragender Dimensionsstabilität. In dieser Hinsicht erreicht PBT die Eigenschaften von BOPET-Folien, im Unterschied zu diesen jedoch ohne Verstreckung. Daher können PBT-Folien, bzw. Folien aus dem oben angegebenen Polybutylenterephthalatmaterial, problemlos mit Zusatzstoffen wie Füllstoffen ausgestattet werden. Da keine Verstreckung stattfinden muss, kommt es auch nicht zu den bei der Verstreckung mit Füllstoffen entstehenden Mikroporen und der damit einhergehenden Gefahr der Selbstspaltung der Folie, d. h. bei dem erfindungsgemäß verwendeten Polybutylenterephthalatmaterial besteht nicht die Gefahr eines Kohäsionsbruchs. Die Basisschicht kann aus diesem Grund problemlos mit Füllstoffen gefüllt und somit opak hergestellt werden.

Als weitere Zusatzstoffe können neben Füllstoffen auch Farbpigmente und sonstige übliche Hilfsstoffe wie Oxidationsstabilisatoren, Flammhemmstoffe oder optische Aufheller enthalten sein. Farbpigmente können gleichzeitig als Füllstoffe wirken. Beispiele für Füllstoffe sind insbesondere Titandioxid (TiO₂; weiß), Ruß (schwarz) und Buntpigmente wie diverse Metalloxide, Metallsilikate, Metallsulfate, etc..

Deckschichtmaterialien sind von dem Basisschichtmaterial verschiedene, laminierbare, Polyestermaterialien, insbesondere laminierbare Co-Polyester. Wie bei dem Basisschichtmaterial beträgt der Polymeranteil bevorzugt mindestens 75 Gew.-%, bevorzugter mindestens 85 Gew.-%, Rest übliche Zusatzstoffe wie Füllstoffe, beispielsweise Farbpigmente, und gegebenenfalls sonstige Hilfsstoffe wie Oxidationsstabilisatoren, Flammhemmstoffe, optische Aufheller, etc. Ein bevorzugter Füllstoff ist Titandioxid, ein weißes Pigment, das bevorzugt verwendet wird, um die Folien opak zu machen.

Der Polymeranteil an dem Polyestermaterial kann Extender enthalten, ist bevorzugt aber frei von Extendern. Bevorzugt ist auch kein PBT in den Deckschichtmaterialien enthalten, und besonders bevorzugt bestehen mindestens 80 Gew. % des Polymeranteils aus Polyethylenterephthalat-Glykol-Copolymer (PETG). In der am meisten bevorzugten Ausführungsform besteht der Polymeranteil ausschließlich (100%) aus PETG.

Zwischenschichtmaterialien sind Polyestermaterialien, die sich zumindest hinsichtlich der Zusammensetzung ihres Polymeranteils von den benachbarten Schichten unterscheiden. Sie bestehen aus einem Polyester oder einem Gemisch von Polyestern und/ oder einem Copolyester oder einem Gemisch von Copolyestern, wobei der Polymeranteil bevorzugt mindestens 75 Gew. %, besonders bevorzugt mindestens 85 Gew. % beträgt. Es können übliche Zusatzstoffe wie Füllstoffe und Extender, wie sie oben genannt wurden, enthalten sein, wobei Extender bevorzugt nicht enthalten sind.

Das bevorzugte Polyestermaterial für die Zwischenschichten ist ein Gemisch aus PBT und einem oder mehreren davon verschiedenen Polyestern und/oder Copolyestern, wobei PETG bevorzugt ist. Besonders bevorzugt bestehen die Zwischenschichten aus einem Gemisch von PBT und PETG, optional mit Füllstoffen wie beispielsweise Pigmenten, um Opazität bzw. eine gewisse Färbung zu erzielen.

Die Zwischenschichten, falls vorhanden, stellen materialmäßig einen Übergang zwischen der Basisschicht und den Deckschichten her und bestehen daher bevorzugt aus denselben Polymermaterialien wie die angrenzenden Schichten, jedoch in entsprechend abgewandelten Mengenanteilen. D. h., bei einer Zwischenschicht zwischen der Basisschicht und der Deckschicht sollte der PBT-Gehalt der Zwischenschicht zwischen dem PBT-Gehalt der Basisschicht und dem PBT-Gehalt der Deckschicht liegen. Weist beispielsweise die Basisschicht 90 Gew. % PBT auf, und weist die Deckschicht 3 Gew. % PBT auf, liegt der PBT-Gehalt der Zwischenschicht bei 3 Gew. % bis 90 Gew. %.

Bei mehreren Zwischenschichten zwischen der Basisschicht und einer Deckschicht sollte der PBT-Gehalt von der Basisschicht zur Deckschicht abnehmen. Die Zwischenschichten enthalten bevorzugt 30 bis 60 Gew. % PBT, Rest PETG, und optional Füllstoffe wie beispielsweise Titandioxid.

Enthalten die Basisschicht, die Deckschichten und die optionalen Zwischenschichten Füllstoffe, so liegt der Füllstoffgehalt in den Schichten bevorzugt jeweils bei etwa 5 bis 15 Gew.%.

Das erfindungsgemäße Folienverbundmaterial besteht aus mindestens zwei Schichten, einer Basisschicht und einer Deckschicht, weist aber bevorzugt an beiden Oberflächen der Basisschicht eine Deckschicht auf. Zwischen der Basisschicht und einer Deckschicht, oder zwischen der Basisschicht und beiden Deckschichten, kann jeweils eine Zwischenschicht oder auch mehrere Zwischenschichten vorgesehen sein. Sind Zwischenschichten vorhanden, ist ihre Anzahl bevorzugt zu beiden Seiten der Basisschicht gleich. Das erfindungsgemäße Folienverbundmaterial ist also bezüglich der Basisschicht "symmetrisch" oder zumindest "teilsymmetrisch" aufgebaut.

"Symmetrisch" heißt, das Folienverbundmaterial ist spiegelsymmetrisch mit der Basisschicht als Symmetrieebene. Zu beiden Seiten der Basisschicht befindet sich die gleiche Anzahl an Schichten, und jede Schicht ist mit ihrer entsprechenden Spiegelschicht identisch hinsichtlich Dicke und Zusammensetzung.

"Teilsymmetrisch" heißt, das Folienverbundmaterial ist spiegelsymmetrisch hinsichtlich der Anzahl der Schichten zu beiden Seiten der Basisschicht, aber die zueinander spiegelsymmetrischen Schichten unterscheiden sich hinsichtlich ihrer Dicke und/oder Zusammensetzung (Polymermaterial, Füllstoffe, etc.).

Die bevorzugten Ausführungsformen haben drei bzw. fünf Schichten und sind symmetrisch oder teilsymmetrisch.

In der besonders bevorzugten Ausführungsform besteht die Basisschicht aus PBT, gegebenenfalls mit einem Anteil PETG, optional mit Füllstoffen, und die beiden Deckschichten bestehen aus PETG, ebenfalls optional mit Füllstoffen.

In der alternativen besonders bevorzugten Ausführungsform ist zwischen der Basisschicht und den Deckschichten jeweils eine Zwischenschicht vorgesehen, die aus PBT und PETG, optional mit Füllstoffen, besteht. Die Zwischenschichten enthalten weniger PBT als die Basisschicht. Hinsichtlich der Zusammensetzung der Basisschicht und der Deckschicht gilt für die fünfschichtige besonders bevorzugte Ausführungsform dasselbe wie für die dreischichtige besonders bevorzugte Ausführungsform.

Das erfindungsgemäße Folienverbundmaterial hat, ganz besonders in seinen bevorzugten Ausführungsformen, gegenüber konventionellen Folien, die im Stand der Technik als Trägerfolien für elektronische Bauteile verwendet werden, eine Reihe von Vorteilen. Dadurch, dass die Basisschicht, die einen erheblichen Teil des Folienverbundmaterials ausmacht, aus PBT oder größtenteils aus PBT besteht, besitzt das Folienverbundmaterial insgesamt eine hohe Dimensionsstabilität und eine hohe mechanische Festigkeit. PBT ist ein teilkristalliner Polyester mit einer ausgewogenen Kombination von Steifigkeit und Festigkeit bei zugleich guter Zähigkeit und großer Wärmeformbeständigkeit sowie hervorragender Dimensionsstabilität. Die Deckschichten hingegen, also die Außenschichten des erfindungsgemäßen Folienverbundmaterials, bestehen aus einem laminierfähigen Material, bevorzugt einem Co-Polyester, und insbesondere aus PETG. Diese Außenschichten verleihen dem Folienverbundmaterial optimale Laminiereigenschaften mit allen gängigen Kartenmaterialien (Polyvinylchlorid, Polycarbonat, chloriertes Polyethylen, Acrylnitril-Butadien-Styrol, Polyethylen, Polypropylen, thermoplastische Polyurethane, Cycloolefin-Copolymere, etc.) sowie optimale Druckeigenschaften. Die Außenschichten können ohne Laminierhilfsmittel, wie beispielsweise Primer, Klebstoffe, sonstige Beschichtungen, laminiert und auch ohne vorherige Primerung und/ oder Beschichtung bedruckt werden. Die Folienverbundmaterialien müssen nicht verstreckt werden, sondern können im unverstreckten Zustand verwendet werden. Daher ergibt sich auch kein Problem mit Mikroporen, wie es insbesondere bei gefüllten BOPET-Folien auftritt, und die Folienverbundmaterialien können in einer oder in mehreren Schichten des Schichtaufbaus mit Füllstoffen gefüllt werden, ohne dass es zu Mikroporen und damit zur Gefahr der Spaltung der Folie in sich selbst (Kohäsionsbruch) kommen kann. Durch die hohe Dimensionsstabilität, die unter anderem bei einer Bestückung mit elektronischen Bauteilen sehr wichtig ist, um deren guten Kontakt untereinander sicherzustellen, und durch die hohe mechanische Festigkeit eignet sich das erfindungsgemäße Folienverbundmaterial zudem sehr gut als mechanischer Stabilisator in und mit anderen Kartenmaterialien im Schichtaufbau einer Karte. Dabei muss das Folienverbundmaterial nicht als Kernschicht in einen symmetrischen Kartenaufbau eingebaut werden, sondern kann auch als Außenschicht verwendet werden.

Die Eigenschaften des erfindungsgemäßen Folienverbundmaterials sind in einem breiten Spektrum variierbar. Dies ist möglich durch Veränderung der Rezepturen der einzelnen Schichten (Art und Anteile verschiedener Polymere, Art und Anteile an Füllstoffen etc.), der Anzahl der Schichten und der Veränderung der einzelnen Schichtdicken.

Die Gesamtdicke des erfindungsgemäßen Folienverbundmaterials beträgt etwa 20 µm bis 1000 µm, bevorzugt etwa 40 µm bis 700 µm, besonders bevorzugt etwa 80 µm bis 500 µm. Dabei entfallen bei einem dreischichtigen Material etwa 60 bis 90% der Gesamtdicke der Folie auf die Basisschicht, und bei einem fünfschichtigen Material etwa 50 bis 80% der Gesamtdicke der Folie auf die Basisschicht.

Die erfindungsgemäßen Folienverbundmaterialien werden bevorzugt durch Coextrusion der thermoplastischen Polyester, die die einzelnen Schichten bilden sollen, hergestellt. Als Extruder sind grundsätzlich alle gängigen Extruder geeignet, beispielsweise Schneckenextruder, wie Einschneckenextruder oder Doppelschneckenextruder oder Kombinationen aus beiden Typen. Füllstoffe und andere Hilfsstoffe können bereits bei der Herstellung der Polymere beziehungsweise der Polymergemische, aus denen die einzelnen Schichten hergestellt werden sollen, zugegeben werden, d.h. die polymeren Beschickungsmaterialien der jeweiligen Extruder enthalten in diesem Fall bereits die fertigen Schichtmaterialien. Die gewünschten Zusatzstoffe können jedoch auch direkt bei der Folienextrusion zugegeben werden. Beispielhafte Extrusionsbedingungen für ein Folienverbundmaterial mit einer Basisschicht aus PBT (Dicke 80 µm) und zwei Deckschichten aus PETG (Dicke jeweils 10 µm), jeweils mit 10 Gew.-% Titandioxid, sind eine Schmelztemperatur zwischen 250°C und 275°C. Durch ein Verändern der Temperatur wird die Schmelzviskosität der einzelnen Schichten beeinflußt, mit dem Ziel, im wesentlichen übereinstimmende Schmelzviskositäten zu erzielen.

Alternativ können die einzelnen Schichten, d.h. Basisschicht, Deckschichten und gegebenenfalls Zwischenschichten, jeweils separat extrudiert und dann heißlaminiert werden. Die Laminierungsbedingungen sind materialabhängig, und typische Laminierungsbedingungen sind etwa Temperaturen von 120°C bis 160°C und ein Druck von 20 bis 150 bar.

Das erfindungsgemäße Folienverbundmaterial kann vorteilhaft als Trägerfolie in den Schichtaufbau einer Karte integriert werden. Hinsichtlich der Art, Anzahl und Anordnung der weiteren Kartenschichten gibt es dabei keine speziellen Einschränkungen. Das erfindungsgemäße Folienverbundmaterial kann mit allen gängigen Kartenmaterialien problemlos laminiert werden und dabei alternativ als Kernschicht der Karte oder als eine Außenschicht der Karte dienen. Eine Laminierung ist natürlich nur mit solchen Kartenmaterialien möglich, die selbst laminierbar sind. Enthält die Karte beispielsweise Schichten aus Papier oder Pappe, so müssen diese Schichten verklebt werden.

In der Karte kann das Folienverbundmaterial als Trägerfolie für unterschiedliche Gegenstände, insbesondere flächige Gegenstände, die in dem Schichtaufbau der Karte geschützt untergebracht werden sollen, beispielsweise für elektronische Datenträger, dienen.

Die Herstellung einer derartigen Karte mit geschützt in den Kartenaufbau integrierten Gegenstände, wie elektronischen Datenträgern, erfolgt in der Weise, dass die Trägerfolie mit den Gegenständen bestückt wird und dann mit einer oder mehreren weiteren Folien laminiert wird, so dass der Gegenstand zwischen der Trägerfolie und der weiteren Folie oder den weiteren Folien eingeschlossen ist. Beim Bestücken der Trägerfolie mit den Gegenständen werden die Gegenstände typischerweise mit der Trägerfolie verklebt. Bestimmte Gegenstände, wie beispielsweise Antennen, werden in Form einer Metallisierung oder Bedruckung (z.B. Siebdruck, Flexodruck etc.) der Trägerfolie aufgebracht, d.h. beispielsweise durch Vakuumbedampfung aufgebracht.

Je nach Gestaltung der Karte im Einzelfall kann es sinnvoll sein, alle Kartenschichten in einem Arbeitsgang miteinander zu laminieren, oder die Laminierung in mehreren Schritten durchzuführen. Eine Laminierung in mehreren Schritten kann insbesondere dann vorteilhaft sein, wenn nicht nur zwischen dem erfindungsgemäßen Folienverbundmaterial und einer weiteren Kartenfolie, sondern auch zwischen anderen Kartenfolien Gegenstände untergebracht werden sollen. Beispielsweise kann eine derartige Karte weitere Gegenstände und/ oder Merkmale enthalten, wie Sicherheitselemente in Form geprägter Strukturen, als Aufdrucke oder als eigenständige eingelegte oder aufgeklebte Elemente, Kennzeichnungen, Kodierungen etc., wie sie hinsichtlich ihrer Art und Anbringung grundsätzlich bekannt sind. Bei der Laminierung der Kartenfolien können Standardlaminiertechniken, wie sie einem Fachmann bekannt sind, verwendet werden. Das erfindungsgemäße Folienverbundmaterial erfordert keine speziellen Maßnahmen bei seiner Laminierung mit anderen Kartenfolien. Es behält seine Form unter Laminierungsbedingungen im Wesentlichen unverändert bei, so dass Kontaktierungsprobleme bei elektronischen Bauteilen vermieden werden, und kann problemlos opak, d.h. mit Füllstoffen, hergestellt werden, ohne dass ein eventueller Kohäsionsbruch des Materials zu befürchten ist. Das Folienverbundmaterial wird nämlich bevorzugt in nicht verstreckter Form eingesetzt, und es wirkt auch in der nicht verstreckten Form wegen seiner hohen Festigkeit als mechanisch stabilisierendes Element der Karte.

Die vorliegende Erfindung wird nachfolgend anhand von Figuren noch weiter veranschaulicht. Es wird darauf hingewiesen, dass die Figuren nicht proportionsgetreu sind. Außerdem wird darauf hingewiesen, dass die Figuren die Erfindung lediglich näher erläutern sollen und in keiner Weise beschränkend zu verstehen sind. Gleiche Bezugsziffern bezeichnen gleiche oder entsprechende Elemente.

Es zeigen:
- Fig. 1: einen Schnitt durch ein erfindungsgemäßes Folienverbundmaterial mit drei Schichten;
- Fig. 2: einen Schnitt durch ein erfindungsgemäßes Folienverbundmaterial mit fünf Schichten, und
- Fig. 3: einen Schnitt durch eine Karte mit einem erfindungsgemäßen Folienverbundmaterial als Trägerschicht für einen Datenträger.

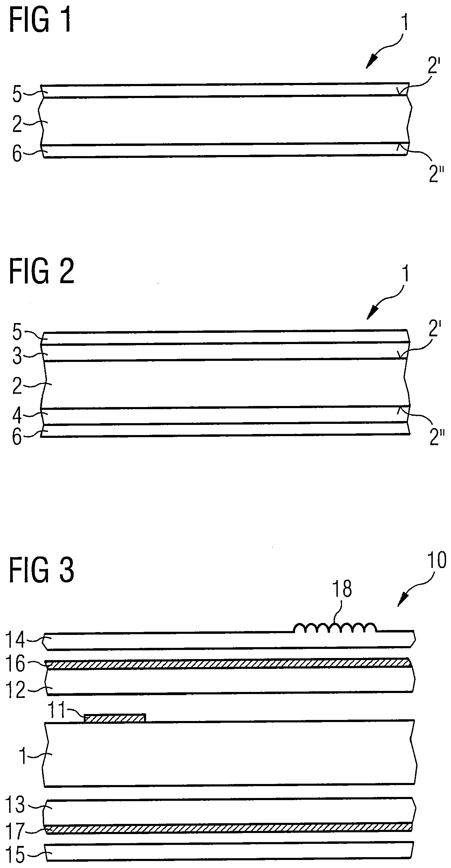

Fig.1 zeigt eine Ausführungsform eines erfindungsgemäßen Folienverbundmaterials 1 mit einer Basisschicht 2 mit einer ersten Oberfläche 2' und einer zweiten Oberfläche 2". Auf der ersten Oberfläche 2' befindet sich eine erste Deckschicht 5, und auf der zweiten Oberfläche 2" befindet sich eine zweite Deckschicht 6. Die erste Deckschicht 5 und die zweite Deckschicht 6 sind die Außenschichten des Folienverbundmaterials 1. Sie bestehen beispielsweise aus Polyethylenterephthalat-Glykol-Copolymer (PETG), und die Basisschicht 2 besteht beispielsweise aus 60 bis 100 Gew.-% Polybutylenterephthalat (PBT), Rest gegebenenfalls PETG. Die Basisschicht 2 und/oder eine oder beide der Außenschichten können Füllstoffe enthalten, um die Folien opak zu machen, beispielsweise 5 bis 15 Gew.-% Titandioxid.

In seiner einfachsten Version (nicht dargestellt) weist das erfindungsgemäße Folienverbundmaterial 1 nur eine Basisschicht 2 und eine Deckschicht 5 auf. Wenn ein derartiges Folienverbundmaterial in den Schichtaufbau einer Karte integriert wird, wird es für gewöhnlich nicht als Kernschicht der Karte, sondern als Außenschicht verwendet, wobei die Deckschicht 5 mit einer weiteren Kartenfolie laminiert wird, während die Basisschicht 2 als eine Außenschicht der Karte dient. Alternativ ist es prinzipiell auch möglich, die Deckschicht 5 als Außenschicht zu verwenden oder das Folienverbundmaterial 1 mit nur zwei Schichten als Kernschicht einer Karte zu verwenden, wobei dann allerdings meist Laminierungshilfsmittel eingesetzt werden müssen.

Fig. 2 zeigt ein erfindungsgemäßes Folienverbundmaterial 1 mit fünf Schichten, einer Basisschicht 2, einer ersten Deckschicht 5, einer zweiten Deckschicht 6, und mit einer ersten Zwischenschicht 3 zwischen der Basisschicht und der ersten Deckschicht 5 sowie einer zweiten Zwischenschicht 4 zwischen der Basisschicht 2 und der zweiten Deckschicht 6. Die Basisschicht und die beiden Deckschichten bestehen aus denselben Materialien wie die Basisschicht und die beiden Deckschichten in der in Fig. 1 gezeigten Ausführungsform, d.h. 60 bis 100 Gew.-% PBT, Rest PETG als Polymermaterial der Basisschicht, und PETG als Polymermaterial der Deckschichten, wobei die Schichten jeweils zusätzlich zu dem Polymermaterial 5 bis 15 Gew.-% (bezogen auf die jeweilige Gesamtmenge des Basisschichtmaterials beziehungsweise des Deckschichtmaterials) Titandioxid enthalten können. Die erste Zwischenschicht 3 und die zweite Zwischenschicht 4 bestehen ebenfalls aus Polymermaterial plus optional 5 bis 15 Gew.-% Titandioxid, wobei das Polymermaterial wiederum aus 30 bis 60 Gew.-% PBT, Rest PETG, besteht.

Fig.1 und Fig. 2 zeigen jeweils symmetrische Ausführungsformen des erfindungsgemäßen Folienverbundmaterials 1. Die symmetrischen Ausführungsformen sind bevorzugt, aber auch andere Ausführungsformen sind innerhalb des Umfangs der vorliegenden Erfindung. Beispielsweise könnte die in Fig. 2 gezeigte Ausführungsform zwei Zwischenschichten zwischen der Basisschicht 2 und der ersten Deckschicht 5 aufweisen und/ oder zwischen der Basisschicht 2 und der zweiten Deckschicht 6 keine zweite Zwischenschicht 4 aufweisen. Es ist auch nicht zwingend, dass zueinander symmetrische Schichten die gleiche Dicke haben, wie in Fig.1 und Fig. 2 dargestellt. Vielmehr können beispielsweise die beiden Deckschichten unterschiedlich dick sein. Alternativ können sich symmetrische Schichten hinsichtlich ihrer Zusammensetzung unterscheiden, beispielsweise unterschiedliche Anteile an PBT und PETG enthalten, oder unterschiedliche Füllstoffe und/oder Buntpigmente, oder alternativ gar keine Füllstoffe, enthalten. Diese Ausführungsformen, die lediglich dieselbe Anzahl von Schichten beidseitig der Basisschicht aufweisen, sich hinsichtlich Schichtdicken und/ oder Zusammensetzung der Schichten aber unterscheiden, sind teilsymmetrisch. Auch teilsymmetrische Ausführungsformen gehören zu den bevorzugten Ausführungsformen, insbesondere wenn sie sich lediglich hinsichtlich ihres Gehalts an Füllstoffen oder Pigmenten unterscheiden. Diese Zusätze dienen lediglich der Erzeugung von Opazität oder Farbe.

Fig. 3 zeigt eine Datenträgerkarte 10 mit einem erfindungsgemäßen Folienverbundmaterial 1 (wie in Fig. 1 oder Fig. 2 dargestellt) im Querschnitt. Zur deutlicheren Erkennbarkeit des Aufbaus sind die Kartenfolien im unverbundenen Zustand dargestellt. Das Folienverbundmaterial ist die Kartenkernfolie und dient als Trägerschicht für einen IC-Chip 11. Das Folienverbundmaterial 1 wird im nicht verstreckten Zustand verwendet. Die in Fig. 3 dargestellte Karte 10 weist außerdem vier weitere Schichten auf, nämlich die Außenschichten 14,15, sowie die Schichten 12 und 13 zwischen dem Folienverbundmaterial 1 und der Außenschicht 14 beziehungsweise zwischen dem Folienverbundmaterial 1 und der Außenschicht 15. Die Kartenfolien 12 und 13 weisen jeweils eine Designdruckschicht 16,17 auf. Geeignet sind beispielsweise opake Folien aus Polycarbonat, Polyester, ABS, PVC, Polyethylen, Polypropylen etc., mit einer Dicke von beispielsweise etwa 100 bis 250 µm. Die Außenschichten 14,15 sind bevorzugt transparente Folien mit einer etwas geringeren Dicke, beispielsweise 50 bis 105 µm. Diese Folien sollten transparent sein, um den Designdruck darunter erkennen zu lassen, und widerstandsfähig gegen Abrieb und Verkratzen sein, um die Karte zu schützen.

Ein geeignetes Material ist beispielsweise PVC. Weiterhin geeignet sind PVC, PETG, Polycarbonat (PC), ABS oder sogenannte Blends aus unterschiedlichen Materialien, wie PC/PETG, PC/ABS, etc. Auch die Außenschichten können mit zusätzlichen Merkmalen ausgestattet werden, beispielsweise mit Sicherheitselementen oder Individualisierungsmerkmalen. In der gezeigten Ausführungsform weist die Außenfolie 14 eine Beugungsstruktur 18 auf.

In Fig. 3 sind die Kartenfolien im Zustand vor dem Laminieren gezeigt. Zur Herstellung der Karte 10 werden die Folien 1, 12, 23, 14 und 15 zusammengeführt und ohne Laminierungshilfsmittel unter Standardlaminierungsbedingungen miteinander laminiert. Die dabei erhaltene Karte 10 ist auch unter Temperaturbelastung mechanisch sehr stabil, strapazierfähig und neigt nicht zum Brechen.

## Patentansprüche

1. Folienverbundmaterial (1) mit mindestens
- einer Basisschicht (2) aus einem Basisschichtmaterial, die eine erste Oberfläche (2') und eine zweite Oberfläche (2") aufweist, und
- einer ersten Deckschicht (5) aus einem ersten Deckschichtmaterial, die die erste Oberfläche (2') der Basisschicht (2) vollflächig abdeckt, **dadurch gekennzeichnet, dass**
- das Basisschichtmaterial ein Polybutylenterephthalatmaterial ist,
- das erste Deckschichtmaterial ein von dem Basisschichtmaterial verschiedenes Polyestermaterial ist, und
- das Folienverbundmaterial zwischen der Basisschicht (2) und der ersten Deckschicht (5) mindestens eine erste Zwischenschicht (3) aus einem ersten Zwischenschichtmaterial aufweist, wobei das erste Zwischenschichtmaterial ein von dem Basisschichtmaterial und dem ersten Deckschichtmaterial verschiedenes Polyestermaterial, das PBT in einer geringeren Menge als das Basisschichtmaterial, aber in einer höheren Menge als das erste Deckschichtmaterial enthält, ist.

2. Folienverbundmaterial (1) nach Anspruch 1,
**dadurch gekennzeichnet, dass**
es eine zweite Deckschicht (6) aus einem zweiten Deckschichtmaterial aufweist, die die zweite Oberfläche (2") der Basisschicht (2) vollflächig abdeckt, wobei das zweite Deckschichtmaterial ein von dem Basisschichtmaterial verschiedenes Polyestermaterial ist, und wobei das erste und das zweite Deckschichtmaterial gleich oder verschieden sind.

3. Folienverbundmaterial (1) nach Anspruch 2,
**dadurch gekennzeichnet, dass**
es zwischen der Basisschicht (2) und der zweiten Deckschicht (6) mindestens eine zweite Zwischenschicht (4) aus einem zweiten Zwischenschichtmaterial aufweist, wobei das zweite Zwischenschichtmaterial ein von dem Basisschichtmaterial und dem zweiten Deckschichtmaterial verschiedenes Polyestermaterial ist, das PBT in einer geringeren Menge als das Basisschichtmaterial, aber in einer höheren Menge als das zweite Deckschichtmaterial enthält, und wobei das erste und das zweite Zwischenschichtmaterial gleich oder verschieden sind.

4. Folienverbundmaterial (1) nach einem der Ansprüche 1 bis 3,
**dadurch gekennzeichnet, dass**
das Basisschichtmaterial einen Polymeranteil von mindestens 75 Gew.-%, Rest Füllstoffe und/oder übliche Zusatzstoffe, aufweist, wobei mindestens 50 Gew.-% des Polymeranteils aus PBT bestehen.

5. Folienverbundmaterial (1) nach einem der Ansprüche 1 bis 4,
**dadurch gekennzeichnet, dass**
das erste Deckschichtmaterial einen Polymeranteil von mindestens 75 Gew.-%, Rest Füllstoffe und/ oder übliche Zusatzstoffe, aufweist, wobei mindestens 80 Gew.-% des Polymeranteils aus PETG bestehen.

6. Folienverbundmaterial (1) nach einem der Ansprüche 2 bis 5,
**dadurch gekennzeichnet, dass** das zweite Deckschichtmaterial einen Polymeranteil von mindestens 75 Gew.-%, Rest Füllstoffe und/oder übliche Zusatzstoffe, aufweist, wobei mindestens 80 Gew.-% des Polymeranteils aus PETG bestehen.

7. Folienverbundmaterial (1) nach einem der Ansprüche 1 bis 6,
**dadurch gekennzeichnet, dass** das erste Zwischenschichtmaterial einen Polymeranteil von mindestens 75 Gew.-%, Rest Füllstoffe und/oder übliche Zusatzstoffe, aufweist, wobei der Polymeranteil PBT und PETG in Mengen enthält, die jeweils zwischen den Mengen an PBT und PETG in dem Basisschichtmaterial und dem ersten Deckschichtmaterial liegen.

8. Folienverbundmaterial (1) nach einem der Ansprüche 3 bis 7,
**dadurch gekennzeichnet, dass** das zweite Zwischenschichtmaterial einen Polymeranteil von mindestens 75 Gew.-%, Rest Füllstoffe und/oder übliche Zusatzstoffe, aufweist, wobei der Polymerateil PBT und PETG in Mengen enthält, die jeweils zwischen den Mengen an PBT und PETG in dem Basisschichtmaterial und dem zweiten Deckschichtmaterial liegen.

9. Folienverbundmaterial (1) nach einem der Ansprüche 1 bis 8,
**dadurch gekennzeichnet, dass** das Basisschichtmaterial einen Polymeranteil von mindestens 80 Gew.-%, Rest Füllstoffe und/oder übliche Zusatzstoffe, aufweist, wobei der Polymeranteil aus 60 bis 100 Gew.-% PBT, Rest PETG, besteht.

10. Folienverbundmaterial (1) nach einem der Ansprüche 1 bis 9,
**dadurch gekennzeichnet, dass** das erste Deckschichtmaterial einen Polymeranteil von mindestens 80 Gew.-%, Rest Füllstoffe und/oder übliche Zusatzstoffe, aufweist, wobei der Polymeranteil aus PETG besteht.

11. Folienverbundmaterial (1) nach einem der Ansprüche 2 bis 10,
**dadurch gekennzeichnet, dass**
das zweite Deckschichtmaterial einen Polymeranteil von mindestens 80 Gew.-%, Rest Füllstoffe und/oder übliche Zusatzstoffe, aufweist, wobei der Polymeranteil aus PETG besteht.

12. Folienverbundmaterial (1) nach einem der Ansprüche 1 bis 11,
**dadurch gekennzeichnet, dass**
das erste Zwischenschichtmaterial einen Polymeranteil von mindestens 80 Gew.-%, Rest Füllstoffe und/oder übliche Zusatzstoffe, aufweist, wobei der Polymeranteil aus 30 bis 60 Gew.-% PBT, Rest PETG, besteht.

13. Folienverbundmaterial (1) nach einem der Ansprüche 3 bis 12,
**dadurch gekennzeichnet, dass**
das zweite Zwischenschichtmaterial einen Polymeranteil von mindestens 80 Gew.-%, Rest Füllstoffe und/ oder übliche Zusatzstoffe, aufweist, wobei der Polymeranteil aus 30 bis 60 Gew.-%, PBT, Rest PETG, besteht.

14. Verfahren zur Herstellung eines Folienverbundmaterials (1) nach einem der Ansprüche 1 bis 13, aufweisend ein Coextrudieren eines Basisschichtmaterials, eines ersten Deckschichtmaterials, gegebenenfalls eines zweiten Deckschichtmaterials, eines ersten Zwischenschichtmaterials, und gegebenenfalls eines zweiten Zwischenschichtmaterials, **dadurch gekennzeichnet, dass**
- das Basisschichtmaterial eine Zusammensetzung hat, wie sie in einem der Ansprüche 1, 4 und 9 angegeben ist,
- das erste Deckschichtmaterial eine Zusammensetzung hat, wie sie in einem der Ansprüche 1, 5 und 10 angegeben ist,
- das zweite Deckschichtmaterial eine Zusammensetzung hat, wie sie in einem der Ansprüche 2, 6 und 11 angegeben ist,
- das erste Zwischenschichtmaterial eine Zusammensetzung hat, wie sie in einem der Ansprüche 1, 7 und 12 angegeben ist, und
- das zweite Zwischenschichtmaterial eine Zusammensetzung hat, wie sie in einem der Ansprüche 3, 8 und 13 angegeben ist.

15. Verfahren zur Herstellung eines Folienverbundmaterials (1) nach einem der Ansprüche 1 bis 13, aufweisend eine Herstellung einer Basisschichtfolie durch Extrudieren eines Basisschichtmaterials, einer ersten Deckschichtfolie durch Extrudieren eines ersten Deckschichtmaterials, gegebenenfalls einer zweiten Deckschichtfolie durch Extrudieren eines zweiten Deckschichtmaterials, einer ersten Zwischenschichtfolie durch Extrudieren eines ersten Zwischenschichtmaterials, und gegebenenfalls einer zweiten Zwischenschichtfolie durch Extrudieren eines zweiten Zwischenschichtmaterials, und ein Laminieren der Folien zu dem Folienverbundmaterial (1),
**dadurch gekennzeichnet, dass**
- das Basisschichtmaterial eine Zusammensetzung hat, wie sie in einem der Ansprüche 1, 4 und 9 angegeben ist,
- das erste Deckschichtmaterial eine Zusammensetzung hat, wie sie in einem der Ansprüche 1, 5 und 10 angegeben ist,
- das zweite Deckschichtmaterial eine Zusammensetzung hat, wie sie in einem der Ansprüche 2, 6 und 11 angegeben ist,
- das erste Zwischenschichtmaterial eine Zusammensetzung hat, wie sie in einem der Ansprüche 1, 7 und 12 angegeben ist, und
- das zweite Zwischenschichtmaterial eine Zusammensetzung hat, wie sie in einem der Ansprüche 3, 8 und 13 angegeben ist.

16. Karte (10) aufweisend eine Trägerfolie, mindestens eine weitere Folie (12) und mindestens ein Bauteil (11) zwischen der Trägerfolie und der weiteren Folie (12), wobei die Trägerfolie und die weitere Folie (12) laminiert sind,
**dadurch gekennzeichnet, dass**
die Trägerfolie ein Folienverbundmaterial (1) nach einem der Ansprüche 1 bis 13 ist.

17. Karte (10) nach Anspruch 16,
**dadurch gekennzeichnet, dass**
das Folienverbundmaterial (1) eine nicht verstreckte Folie ist.

18. Karte (10) nach Anspruch 16 oder 17,
**dadurch gekennzeichnet, dass**
das Bauteil (11) ein elektronisches Bauteil ist.

19. Verfahren zur Herstellung einer Karte (10) nach einem der Ansprüche 16 bis 18,
**dadurch gekennzeichnet, dass**
das Folienverbundmaterial (1) und die mindestens eine weitere Folie (12) ohne Verwendung von Laminierhilfsmitteln durch Laminieren miteinander verbunden werden.

## Claims

1. A foil composite material (1) having at least
- one base layer (2) of a base layer material, which has a first surface (2') and a second surface (2"), and
- one first cover layer (5) of a first cover layer material, which covers the first surface (2') of the base layer (2) all over,
**characterized in that**
- the base layer material is a polybutylene terephthalate material,
- the first cover layer material is a polyester material different from the base layer material, and
- the foil composite material (1) has between the base layer (2) and the first cover layer (5) at least one first intermediate layer (3) of a first intermediate layer material, wherein the first intermediate layer material is a polyester material different from the base layer material and the first cover layer material, which contains PBT in a lower quantity than the base layer material, but in a higher quantity than the first cover layer material.

2. The foil composite material (1) according to claim 1, **characterized in that** it has a second cover layer (6) of a second cover layer material, which covers the second surface (2") of the base layer (2) all over, wherein the second cover layer material is a polyester material different from the base layer material, and wherein the first and the second cover layer material are the same or different.

3. The foil composite material (1) according to claim 2, **characterized in that** it has between the base layer (2) and the second cover layer (6) at least one second intermediate layer (4) of a second intermediate layer material, wherein the second intermediate layer material is a polyester material different from the base layer material and the second cover layer material, which contains PBT in a lower quantity than the base layer material, but in a higher quantity than the second cover layer material, and wherein the first and the second intermediate layer material is the same or different.

4. The foil composite material (1) according to any of the claims 1 to 3, **characterized in that** the base layer material has a polymer portion of at least 75 weight percent, remainder fillers and/or usual additives, wherein at least 50 weight percent of the polymer portion consist of PBT.

5. The foil composite material (1) according to any of the claims 1 to 4, **characterized in that** the first cover layer material has a polymer portion of at least 75 weight percent, remainder fillers and/or usual additives, wherein at least 80 weight percent of the polymer portion consist of PETG.

6. The foil composite material (1) according to any of the claims 2 to 5, **characterized in that** the second cover layer material has a polymer portion of at least 75 weight percent, remainder fillers and/or usual additives, wherein at least 80 weight percent of the polymer portion consist of PETG.

7. The foil composite material (1) according to any of the claims 1 to 6, **characterized in that** the first intermediate layer material has a polymer portion of at least 75 weight percent, remainder fillers and/or usual additives, wherein the polymer portion contains PBT and PETG in quantities which respectively lie between the quantities of PBT and PETG in the base layer material and the first cover layer material.

8. The foil composite material (1) according to any of the claims 3 to 7, **characterized in that** the second intermediate layer material has a polymer portion of at least 75 weight percent, remainder fillers and/or usual additives, wherein the polymer portion contains PBT and PETG in quantities which respectively lie between the quantities of PBT and PETG in the base layer material and the second cover layer material.

9. The foil composite material (1) according to any of the claims 1 to 8, **characterized in that** the base layer material has a polymer portion of at least 80 weight percent, remainder fillers and/or usual additives, wherein the polymer portion consists of 60 to 100 weight percent PBT, remainder PETG.

10. The foil composite material (1) according to any of the claims 1 to 9, **characterized in that** the first cover layer material has a polymer portion of at least 80 weight percent, remainder fillers and/or usual additives, wherein the polymer portion consists of PETG.

11. The foil composite material (1) according to any of the claims 2 to 10, **characterized in that** the second cover layer material has a polymer portion of at least 80 weight percent, remainder fillers and/or usual additives, wherein the polymer portion consists of PETG.

12. The foil composite material (1) according to any of the claims 1 to 11, **characterized in that** the first intermediate layer material has a polymer portion of at least 80 weight percent, remainder fillers and/or usual additives, wherein the polymer portion consists of 30 to 60 weight percent PBT, remainder PETG.

13. The foil composite material (1) according to any of the claims 3 to 12, **characterized in that** the second intermediate layer material has a polymer portion of at least 80 weight percent, remainder fillers and/or usual additives, wherein the polymer portion consists of 30 to 60 weight percent PBT, remainder PETG.

14. A method for manufacturing a foil composite material (1) according to any of the claims 1 to 13, comprising a coextrusion of a base layer material, of a first cover layer material, optionally of a second cover layer material, of a first intermediate layer material, and optionally of a second intermediate layer material, **characterized in that**
- the base layer material has a composition as stated in any of the claims 1, 4 and 9,
- the first cover layer material has a composition as stated in any of the claims 1, 5 and 10,
- the second cover layer material has a composition as stated in any of the claims 2, 6 and 11,
- the first intermediate layer material has a composition as stated in any of the claims 1, 7 and 12, and
- the second intermediate layer material has a composition as stated in any of the claims 3, 8 and 13.

15. A method for manufacturing a foil composite material (1) according to any of the claims 1 to 13, comprising a manufacturing of a base layer foil through the extrusion of a base layer material, of a first cover layer foil through the extrusion of a first cover layer material, optionally of a second cover layer foil through the extrusion of a second cover layer material, of a first intermediate layer foil through the extrusion of a first intermediate layer material, and optionally of a second intermediate layer foil through the extrusion of a second intermediate layer material, and a lamination of the foils to form the foil composite material (1), **characterized in that**
- the base layer material has a composition as stated in any of the claims 1, 4 and 9,
- the first cover layer material has a composition as stated in any of the claims 1, 5 and 10,
- the second cover layer material has a composition as stated in any of the claims 2, 6 and 11,
- the first intermediate layer material has a composition as stated in any of the claims 1, 7 and 12, and
- the second intermediate layer material has a composition as stated in any of the claims 3, 8 and 13.

16. A card (10) having a carrier foil, at least one further foil (12) and at least one component (11) between the carrier foil and the further foil (12), wherein the carrier foil and the further foil (12) are laminated, **characterized in that** the carrier foil is a foil composite material (1) according to any of the claims 1 to 13.

17. The card (10) according to claim 16, **characterized in that** the foil composite material (1) is a non-stretched foil.

18. The card (10) according to claim 16 or 17, **characterized in that** the component (11) is an electronic component.

19. A method for manufacturing a card (10) according to any of the claims 16 to 18, **characterized in that** the foil composite material (1) and the at least one further foil (12) are connected to each other through lamination without the use of lamination aids.

## Revendications

1. Matériau composite en feuille (1) comprenant au moins
- une couche de base (2) composée d'un matériau de couche de base et présentant une première surface (2') et une deuxième surface (2"), et
- une première couche de recouvrement (5) composée d'un premier matériau de couche de recouvrement et recouvrant à pleine surface la première surface (2') de la couche de base (2), **caractérisé en ce que**
- le matériau de couche de base est un matériau polybutylène téréphtalate,
- le premier matériau de couche de recouvrement est un matériau polyester différent du matériau de couche de base, et
- le matériau composite en feuille comporte entre la couche de base (2) et la première couche de recouvrement (5) au moins une première couche intermédiaire (3) composée d'un premier matériau de couche intermédiaire, cependant que le premier matériau de couche intermédiaire est un matériau polyester qui est différent du matériau de couche de base et du premier matériau de couche de recouvrement et qui contient du PBT en une quantité plus faible que le matériau de couche de base mais en une quantité plus élevée que le premier matériau de couche de recouvrement.

2. Matériau composite en feuille (1) selon la revendication 1,
**caractérisé en ce**
**qu'**il comporte une deuxième couche de recouvrement (6) composée d'un deuxième matériau de couche de recouvrement et recouvrant à pleine surface la deuxième surface (2") de la couche de base (2), cependant que le deuxième matériau de couche de recouvrement est un matériau polyester différent du matériau de couche de base, et cependant que le premier et le deuxième matériau de couche de recouvrement sont identiques ou différents.

3. Matériau composite en feuille (1) selon la revendication 2,
**caractérisé en ce**
**qu'**il comporte entre la couche de base (2) et la deuxième couche de recouvrement (6) au moins une deuxième couche intermédiaire (4) composée d'un deuxième matériau de couche intermédiaire, cependant que le deuxième matériau de couche intermédiaire est un matériau polyester qui est différent du matériau de couche de base et du deuxième matériau de couche de recouvrement et qui contient du PBT en une quantité plus faible que le matériau de couche de base mais en une quantité plus élevée que le premier matériau de couche de recouvrement, et cependant que le premier et le deuxième matériau de couche intermédiaire sont identiques ou différents.

4. Matériau composite en feuille (1) selon une des revendications de 1 à 3,
**caractérisé en ce que**
le matériau de couche de base comporte une part de polymères d'au moins 75 pourcent par poids, le reste étant des matières de remplissage et/ou des additifs usuels, cependant qu'au moins 50 pourcent par poids de la part de polymères consistent en du PBT.

5. Matériau composite en feuille (1) selon une des revendications de 1 à 4,
**caractérisé en ce que**
le premier matériau de couche de recouvrement comporte une part de polymères d'au moins 75 pourcent par poids, le reste étant des matières de remplissage et/ou des additifs usuels, cependant qu'au moins 80 pourcent par poids de la part de polymères consistent en du PETG.

6. Matériau composite en feuille (1) selon une des revendications de 2 à 5,
**caractérisé en ce que**
le deuxième matériau de couche de recouvrement comporte une part de polymères d'au moins 75 pourcent par poids, le reste étant des matières de remplissage et/ou des additifs usuels, cependant qu'au moins 80 pourcent par poids de la part de polymères consistent en du PETG.

7. Matériau composite en feuille (1) selon une des revendications de 1 à 6,
**caractérisé en ce que**
le premier matériau de couche intermédiaire comporte une part de polymères d'au moins 75 pourcent par poids, le reste étant des matières de remplissage et/ou des additifs usuels, cependant que la part de polymères contient du PBT et du PETG en des quantités qui se situent respectivement entre les quantités de PBT et de PETG contenues dans le matériau de couche de base et dans le premier matériau de couche de recouvrement.

8. Matériau composite en feuille (1) selon une des revendications de 3 à 7,
**caractérisé en ce que**
le deuxième matériau de couche intermédiaire comporte une part de polymères d'au moins 75 pourcent par poids, le reste étant des matières de remplissage et/ou des additifs usuels, cependant que la part de polymères contient du PBT et du PETG en des quantités qui se situent respectivement entre les quantités de PBT et de PETG contenues dans le matériau de couche de base et dans le deuxième matériau de couche de recouvrement.

9. Matériau composite en feuille (1) selon une des revendications de 1 à 8,
**caractérisé en ce que**
le matériau de couche de base comporte une part de polymères d'au moins 80 pourcent par poids, le reste étant des matières de remplissage et/ou des additifs usuels, cependant que la part de polymères consiste en 60 à 100 pourcent par poids de PBT, le reste étant du PETG.

10. Matériau composite en feuille (1) selon une des revendications de 1 à 9,
**caractérisé en ce que**
le premier matériau de couche de recouvrement comporte une part de polymères d'au moins 80 pourcent par poids, le reste étant des matières de remplissage et/ou des additifs usuels, cependant que la part de polymères consiste en du PETG.

11. Matériau composite en feuille (1) selon une des revendications de 2 à 10,
**caractérisé en ce que**
le deuxième matériau de couche de recouvrement comporte une part de polymères d'au moins 80 pourcent par poids, le reste étant des matières de remplissage et/ou des additifs usuels, cependant que la part de polymères consiste en du PETG.

12. Matériau composite en feuille (1) selon une des revendications de 1 à 11,
**caractérisé en ce que**
le premier matériau de couche intermédiaire comporte une part de polymères d'au moins 80 pourcent par poids, le reste étant des matières de remplissage et/ou des additifs usuels, cependant que la part de polymères consiste en 30 à 60 pourcent par poids de PBT, le reste étant du PETG.

13. Matériau composite en feuille (1) selon une des revendications de 3 à 12,
**caractérisé en ce que**
le deuxième matériau de couche intermédiaire comporte une part de polymères d'au moins 80 pourcent par poids, le reste étant des matières de remplissage et/ou des additifs usuels, cependant que la part de polymères consiste en 30 à 60 pourcent par poids de PBT, le reste étant du PETG.

14. Procédé de fabrication d'un matériau composite en feuille (1) selon une des revendications de 1 à 13, comprenant une coextrusion d'un matériau de couche de base, d'un premier matériau de couche de recouvrement, éventuellement d'un deuxième matériau de couche de recouvrement, d'un premier matériau de couche intermédiaire, et éventuellement d'un deuxième matériau de couche intermédiaire,
**caractérisé en ce que**
- le matériau de couche de base a une composition telle qu'elle est indiquée dans une des revendications 1, 4 et 9,
- le premier matériau de couche de recouvrement a une composition telle qu'elle est indiquée dans une des revendications 1, 5 et 10,
- le deuxième matériau de couche de recouvrement a une composition telle qu'elle est indiquée dans une des revendications 2, 6 et 11,
- le premier matériau de couche intermédiaire a une composition telle qu'elle est indiquée dans une des revendications 1, 7 et 12,
- le deuxième matériau de couche intermédiaire a une composition telle qu'elle est indiquée dans une des revendications 3, 8 et 13.

15. Procédé de fabrication d'un matériau composite en feuille (1) selon une des revendications de 1 à 13, comprenant une fabrication d'un feuille de couche de base par extrusion d'un matériau de couche de base, d'une première feuille de couche de recouvrement par extrusion d'un premier matériau de couche de recouvrement, éventuellement d'une deuxième feuille de couche de recouvrement par extrusion d'un deuxième matériau de couche de recouvrement, d'une première feuille de couche intermédiaire par extrusion d'un premier matériau de couche intermédiaire, et éventuellement d'une deuxième feuille de couche intermédiaire par extrusion d'un deuxième matériau de couche intermédiaire, et un laminage des feuilles de manière à obtenir le matériau composite en feuille (1),
**caractérisé en ce que**
- le matériau de couche de base a une composition telle qu'elle est indiquée dans une des revendications 1, 4 et 9,
- le premier matériau de couche de recouvrement a une composition telle qu'elle est indiquée dans une des revendications 1, 5 et 10,
- le deuxième matériau de couche de recouvrement a une composition telle qu'elle est indiquée dans une des revendications 2, 6 et 11,
- le premier matériau de couche intermédiaire a une composition telle qu'elle est indiquée dans une des revendications 1, 7 et 12,
- le deuxième matériau de couche intermédiaire a une composition telle qu'elle est indiquée dans une des revendications 3, 8 et 13.

16. Carte (10) comprenant une feuille support, au moins une autre feuille (12) et au moins un composant (11) entre la feuille support et l'autre feuille (12), cependant que la feuille support et l'autre feuille (12) sont laminées,
**caractérisée en ce que**
la feuille support est un matériau composite en feuille (1) selon une des revendications de 1 à 13.

17. Carte (10) selon la revendication 16,
**caractérisée en ce que**
le matériau composite en feuille (1) est une feuille non étirée.

18. Carte (10) selon la revendication 16 ou 17,
**caractérisée en ce que**
le composant (11) est un composant électronique.

19. Procédé de fabrication d'une carte (10) selon une des revendications de 16 à 18, **caractérisé en ce que**
le matériau composite en feuille (1) et la au moins une autre feuille (12) sont joints ensemble par laminage sans utilisation d'auxiliaires de laminage.
